# EUROPEAN PATENT APPLICATION

(11) **EP 4 563 945 A1**
(43) Date of publication of application: **04.06.2025**
(21) Application number: 24216290.7
(22) Date of filing: 28.11.2024
(51) Int. Cl.: G01C 23/00, G01C 21/00, G06F 16/29, G08G 5/74, G08G 5/80, G09B 29/10

(54) **TERRAIN DATABASE ADAPTIVE RESOLUTION METHOD**

(30) Priority: 29.11.2023 US 202318523095
(71) Applicant: Rockwell Collins, Inc., Cedar Rapids, IA 52498 (US)
(72) Inventor: NIEHAUS, Ryan L., Cedar Rapids, IA, 52404 (US); KIRTZ, Jon E., Center Point, IA, 52213 (US); SRIVASTAVA, Guarav, 500089 Hyderabad (IN)
(74) Representative: Dehns

(57) **Abstract**

A system and method for improving the resolution and accuracy of avionics databases with limited impact on the size of the database includes identifying tiles including runway approaches and incorporates higher resolution tiles for those regions. The system may also identify tiles including high terrain variability. Those regions may also include higher resolution tiles. The system may identify multiple tiles that each define the same elevation and / or terrain variability. Those tiles may be consolidated into a single lower resolution tile. Aircraft may record elevations via onboard sensors. Multiple sensor samples may be combined and applied to an existing database to constrain the database accuracy.

## Description

### BACKGROUND

Terrain databases consists of an evenly-gridded set of elevation posts (tiles). Terrain databases are organized collections of equally spaced tiles to cover the earth (or some subset). Each tile has a four-corner boundary with some associated parameters such as altitude and terrain or Water.

Terrain source databases come in various resolutions. Terrain tile size depends on the resolution of the database. The higher the resolution of the database, the smaller is the tile Size and vice-versa.

Geographic reference systems treat the globe as if it were a sphere divided into 360 equal parts called degrees. Each degree is subdivided into 60 minutes. Each minute is composed of 60 seconds. An arc-second represents the distance of latitude or longitude traversed on the earth's surface while traveling one second (1/3600th of a degree). At the equator, an arc-second of longitude approximately equals an arc-second of latitude, which is 1/60th of a nautical mile (101.27 feet / 30.87 meters). Arc-seconds of latitude remain nearly constant, while arcseconds of longitude decrease in a trigonometric cosine-based fashion as one moves toward the earth's poles. Also, tiles generally ignore the curvature of the earth and uneven terrain within a given tile. Higher resolution databases have better database accuracy but take up more storage space and processing speed is slow.

Furthermore, avionics applications utilize a high-resolution terrain database to provide the pilot the overall awareness of the aircraft, its physical location in space, and all terrain relating to the safety of the flight. Situational awareness databases are created by civil aviation authorities or public entities using one or more sources. Multiple sources may generate some accuracy and incorrect altitude issues in the database release.

Database cells often include inaccurate altitudes near the approach path to the runway due to insufficient resolution and data sensor issues such as highly reflective surfaces. There may be some difference between the database cell altitude and aircraft sensor data altitude. Also, extra guard bands may be added by applications when there is low data accuracy, or no accuracy information is present. Vertical and horizontal accuracy attributes capture reported source accuracy in the database when specified. In many cases the source providers do not specify vertical and horizontal accuracy information causing the application to add excessive guard to the existing obstacle height and width.

Each terrain database cell (single elevation post) has elevation; each Obstacle database cell (single elevation post) has elevation and accuracy information. Each cell has both horizontal accuracy (width) and vertical accuracy (height) encoded by the supplier. In many cases, the source providers do not specify vertical and horizontal accuracy information.

### SUMMARY

**to** the invention provides a computer apparatus, a system and method as defined by the claims, for improving the resolution and accuracy of avionics databases with limited impact on the size of the database. The system identifies tiles including runway approaches and incorporates higher resolution tiles for those regions.

In embodiments, the system may also identify tiles including high terrain variability. Those regions may also include higher resolution tiles.

In embodiments, the system may identify multiple tiles that each define the same elevation and / or terrain variability. Those tiles may be consolidated into a single lower resolution tile.

In embodiments, aircraft may record elevations via onboard sensors. Multiple sensor samples may be combined and applied to an existing database to constrain the database accuracy.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram of a system according to an exemplary embodiment;
FIG. 2 shows a flowchart of a method according to an exemplary embodiment;
FIG. 3 shows a flowchart of a method according to an exemplary embodiment; and
FIG. 4 shows a block diagram of a neural network according an exemplary embodiment of the inventive concepts disclosed herein;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

**As** used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a system and method for improving the resolution and accuracy of avionics databases with limited impact on the size of the database. The system identifies tiles including runway approaches and incorporates higher resolution tiles for those regions. The system may also identify tiles including high terrain variability. Those regions may also include higher resolution tiles. The system may identify multiple tiles that each define the same elevation and / or terrain variability. Those tiles may be consolidated into a single lower resolution tile. Aircraft may record elevations via onboard sensors. Multiple sensor samples may be combined and applied to an existing database to constrain the database accuracy.

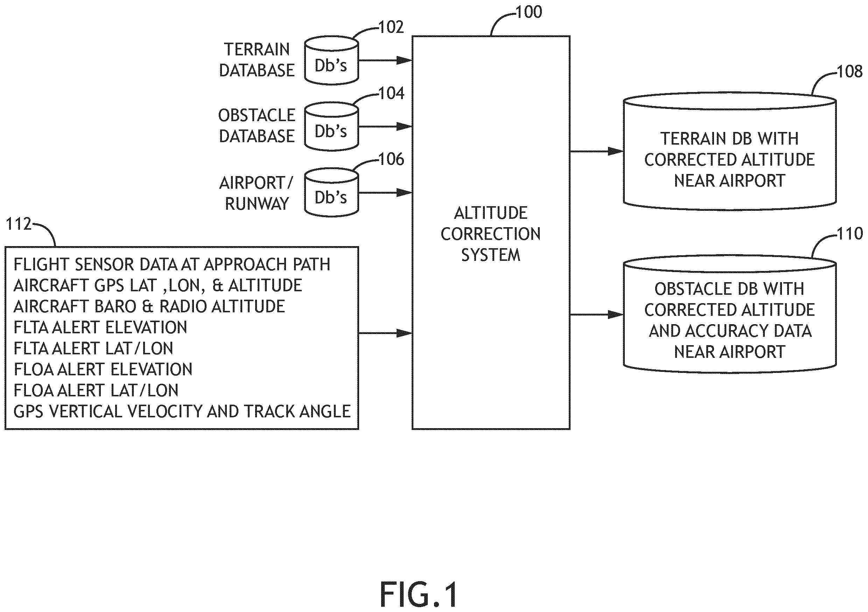

Referring to FIG. 1, a block diagram of a system according to an exemplary embodiment is shown. A majority of nuisance terrain alerts occur when an aircraft is near to a runway at lower altitudes. It is desirable to reduce any sources of error that lead to such nuisance alerts.

A computer system 100, including at least one processor configured via non-transitory processor executable code, is in data communication with a plurality of data sources 102, 104, 106 and a plurality of onboard flight sensors 112 or a data source including previously recorded data from a plurality of onboard sensors 112. It may be appreciated that the data from the plurality of on-board sensors may include data from multiple independent flights, including flights from different aircraft, at different times, and with different onboard sensors. Any sensors can be utilized that further define resolution and resolve accuracy. Sensors 112 may include GPS, radio altimeter, pressure altitude, or the like, as well as basic air data.

In at least one embodiment, the system 100 receives terrain data from a terrain database 102, obstacle data from an obstacle database 104, and airport / runway data from an airport database 106. The system 100 validates the terrain database 102 and obstacle database 104 under the approach path. Using flight sensor data collected from the onboard flight sensors 112, the system 100 correlates the sensor data against the terrain database 102 and obstacle database 104 cell. Once multiple approaches are captured for a given runway, data analysis techniques can be applied looking for anomalies in the terrain and obstacle data. These anomalies can then be addressed directly in the databases 102, 104. In at least one embodiment, the system 100 utilizes machine learning such as neural networks. Alternatively, or in addition, algorithmic analysis may be applied.

Based on the flight sensor data, the system 100 may sub-divide the existing database elevation tile into smaller elevation tiles providing better database accuracy and higher adaptive resolution. In at least one embodiment, the system 100 may define a threshold deviation; when the flight sensor data for a portion of the tile deviates from the tile by more than the threshold deviation, the system 100 may begin the process of subdividing the tile; if the flight sensor data for that portion never exceeds the threshold deviation, then the tile may remain intact.

In at least one embodiment, the system 100 may analyze flight sensor data across multiple tiles. The system 100 may determine that multiple adjacent tiles each indicate the same or similar altitude. Those tiles may be consolidated into a single tile. In at least one embodiment, the system 100 may specifically identify four tile blocks that may be combined into a single tile (within the constraints of a tile mapping to the globe). In at least one embodiment, the system 100 may define a maximum threshold deviation when consolidating tiles; tiles with a greater elevation deviation than the maximum threshold deviation are not consolidated. Consolidation allows the overall terrain database 102 to remain consistent over regions proximal to airports or airport runways include higher resolution tiles.

In at least one embodiment, the system 100 validates the terrain data under the approach path. Using flight data collected from the onboard sensors 112, the system 100 correlates the sensor data against the terrain database 102. Once multiple approaches are captured for a given runway, data analysis techniques can be applied looking for anomalies in the terrain data. These anomalies can then be addressed directly in the terrain database 102. In at least one embodiment, the system utilizes machine learning such as neural networks. Alternatively, or in addition, algorithmic analysis may be applied.

Embodiments of the present disclosure correct the altitude mismatch and improve the accuracy of the database. The system 100 produces a terrain database 108 with corrected altitude data near airports, and an obstacle database 110 with corrected altitude and accuracy data. In at least one embodiment, the system 100 may constrain the accuracy of data based on the onboard sensors compiled from multiple flights / multiple sources. That is to say, the system 100 may maintain altitude data within the terrain database 108 and obstacle database 110, but add or update constraints to any uncertainty about those altitudes.

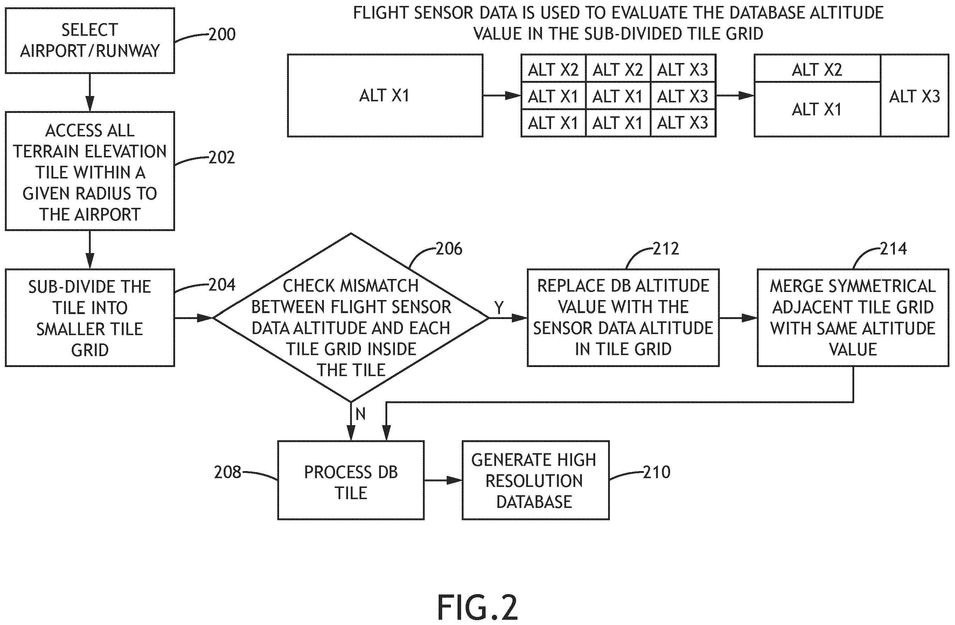

Referring to FIG. 2, a flowchart of a method according to an exemplary embodiment is shown. A computer apparatus executing the method may select 200 an airport / runway and access 202 all terrain elevation tiles within some predetermined distance of that airport / runway. The computer apparatus may then sub-divide the terrain elevation tiles and determine new elevations for the newly created tiles with reference to stored terrain data.

In at least one embodiment, the computer apparatus may determine 206 if there is a mismatch between onboard flight sensor data and the elevation assigned to each newly created tile; flight sensor data may be compiled and correlated over a plurality of flights. If there is no mismatch, or any discrepancy is within some predetermined threshold, then computer apparatus processes 208 the new tiles to generate 210 a high-resolution portion of the database. If the computer apparatus determines 206 that a mismatch does exist, the computer apparatus may replace 212 elevations in the terrain database with the compiled and correlated sensor data for the corresponding tiles.

In at least one embodiment, the computer apparatus may merge 214 symmetrical, adjacent tiles with the same elevation value to create one lower resolution tile where higher resolution data is unnecessary. It may be appreciated that tiles may be merged where the number and disposition of the tiles is conducive to create one single tile.

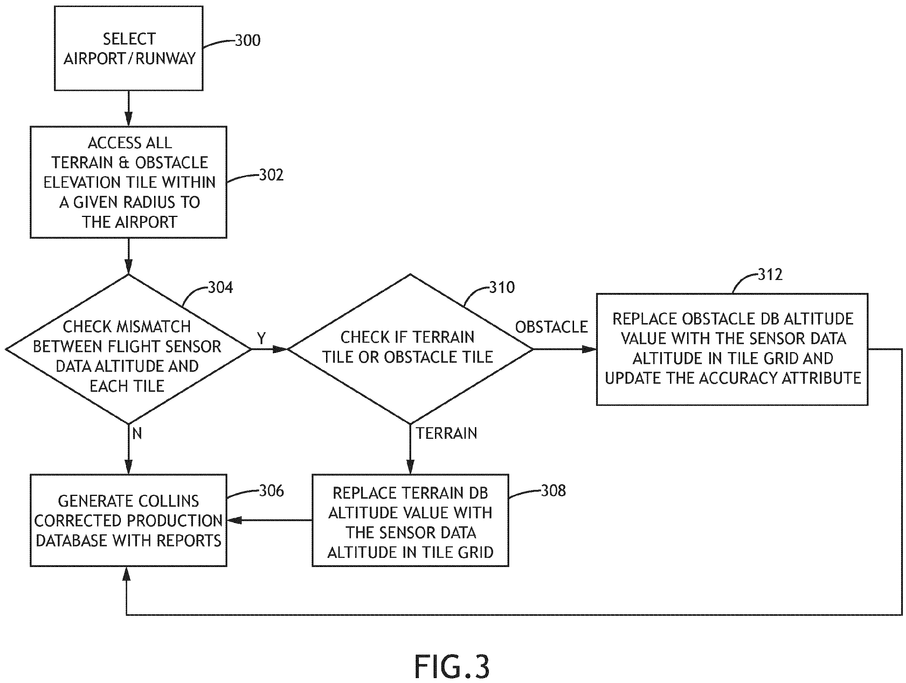

Referring to FIG. 3, a flowchart of a method according to an exemplary embodiment is shown. A computer apparatus executing the method may select 300 an airport / runway and access 302 all terrain and obstacle elevation tiles within some predetermined distance of that airport / runway. The computer apparatus may determine 304 if there is a mismatch between onboard flight sensor data and the elevation assigned to each tile; flight sensor data may be compiled and correlated over a plurality of flights. If there is no mismatch, or any discrepancy is within some predetermined threshold, then computer apparatus produces 306 a production database.

If the computer apparatus determines 304 that a mismatch does exist, the computer apparatus may determine 310 if the mismatch is in the terrain database or the obstacle database. If the mismatch is in the terrain database, the computer apparatus replaces 308 the elevation value in the corresponding tile with the elevation value determined via the onboard flight sensor data. The elevation value determined via the onboard flight sensor data may be an average value determined over a plurality of flights, a weighted value according to the known accuracy of the corresponding sensor, a value from the known most accurate sensor constrained by other flight sensor data, or some other such methodology.

If the mismatch is in the obstacle database, the computer apparatus replaces 312 the elevation value in the corresponding tile with the elevation value determined via the onboard flight sensor data and updates the accuracy attribute (including adding an accuracy attribute where none currently exists). The accuracy attribute may be defined by the range of flight sensor data values.

When the mismatch has been corrected, the computer apparatus produces 306 the appropriate databases.

In at least one embodiment, the computer apparatus may embody in a trained artificial intelligence such as a trained neural network.

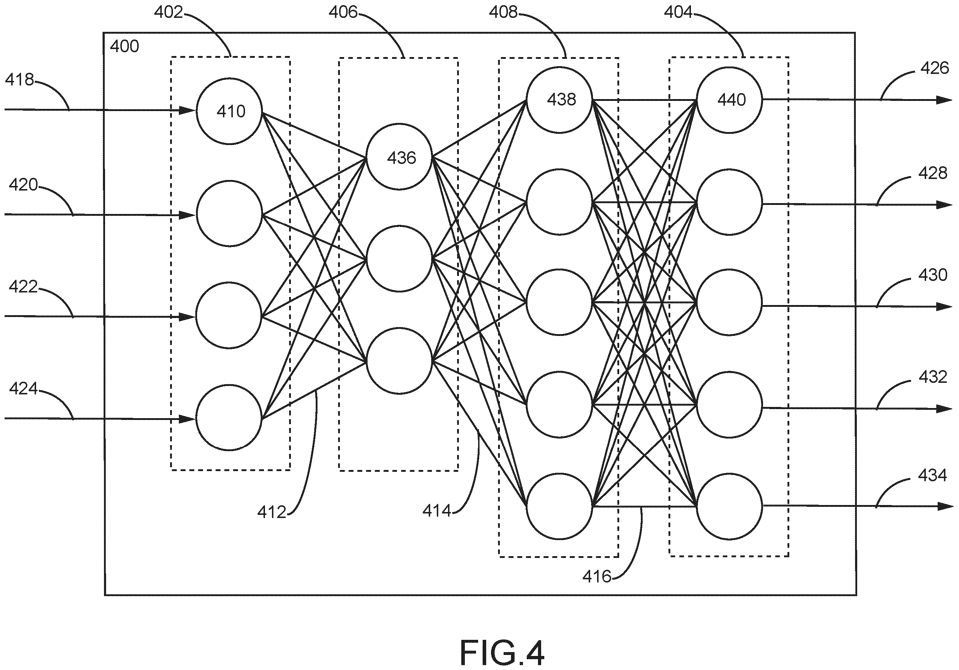

Referring to FIG. 4, a block diagram of a neural network 400 according an exemplary embodiment of the inventive concepts disclosed herein is shown. The neural network 400 comprises an input layer 402, and output layer 404, and a plurality of internal layers 406, 408. Each layer comprises a plurality of neurons or nodes 410, 436, 438, 440. In the input layer 402, each node 410 receives one or more inputs 418, 420, 422, 424 corresponding to a digital signal and produces an output 412 based on an activation function unique to each node 410 in the input layer 402. An activation function may be a Hyperbolic tangent function, a linear output function, and / or a logistic function, or some combination thereof, and different nodes 410, 436, 438, 440 may utilize different types of activation functions. In at least one embodiment, such activation function comprises the sum of each input multiplied by a synaptic weight. The output 412 may comprise a real value with a defined range or a Boolean value if the activation function surpasses a defined threshold. Such ranges and thresholds may be defined during a training process. Furthermore, the synaptic weights are determined during the training process.

Outputs 412 from each of the nodes 410 in the input layer 402 are passed to each node 436 in a first intermediate layer 406. The process continues through any number of intermediate layers 406, 408 with each intermediate layer node 436, 438 having a unique set of synaptic weights corresponding to each input 412, 414 from the previous intermediate layer 406, 408. It is envisioned that certain intermediate layer nodes 436, 438 may produce a real value with a range while other intermediated layer nodes 436, 438 may produce a Boolean value. Furthermore, it is envisioned that certain intermediate layer nodes 436, 438 may utilize a weighted input summation methodology while others utilize a weighted input product methodology. It is further envisioned that synaptic weight may correspond to bit shifting of the corresponding inputs 412, 414, 416.

An output layer 404 including one or more output nodes 440 receives the outputs 416 from each of the nodes 438 in the previous intermediate layer 408. Each output node 440 produces a final output 426, 428, 430, 432, 434 via processing the previous layer inputs 416. Such outputs may comprise separate components of an interleaved input signal, bits for delivery to a register, or other digital output based on an input signal and DSP algorithm.

In at least one embodiment, each node 410, 436, 438, 440 in any layer 402, 406, 408, 404 may include a node weight to boost the output value of that node 410, 436, 438, 440 independent of the weighting applied to the output of that node 410, 436, 438, 440 in subsequent layers 404, 406, 408. It may be appreciated that certain synaptic weights may be zero to effectively isolate a node 410, 436, 438, 440 from an input 412, 414, 416, from one or more nodes 410, 436, 438 in a previous layer, or an initial input 418, 420, 422, 424.

In at least one embodiment, the number of processing layers 402, 404, 406, 408 may be constrained at a design phase based on a desired data throughput rate. Furthermore, multiple processors and multiple processing threads may facilitate simultaneous calculations of nodes 410, 436, 438, 440 within each processing layers 402, 404, 406, 408.

Layers 402, 404, 406, 408 may be organized in a feed forward architecture where nodes 410, 436, 438, 440 only receive inputs from the previous layer 402, 404, 406 and deliver outputs only to the immediately subsequent layer 404, 406, 408, or a recurrent architecture, or some combination thereof.

A trained neural network according to at least one exemplary embodiment may receive terrain data from one or more terrain and obstacle databases as input, and identify tiles to be broken up for greater granularity. Furthermore, the neural network may be trained to identify tiles to be combined based on elevation data within some threshold consistency.

Embodiments of the present disclosure create adaptively greater resolution near an area of interest such as a runway. In another embodiment, the system may consolidate areas that do not need great resolution (e.g., flat, featureless areas) into larger tiles; reducing the overall size of the database.

Furthermore, embodiments of the present disclosure refine elevation values in existing databases based on actually flight sensor data compiled over time. Flight sensor data may be used to establish accuracy metrics even when the elevation values remain unchanged.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the scope of the invention as defined by the claims. Furthermore, any of the features disclosed in relation to any of the individual embodiments may be incorporated into any other embodiment.

## Claims

1. A method for improving accuracy of terrain and obstacle databases comprising:
receiving terrain tile data from a terrain database (102) in a plurality of databases;
receiving (200) a selected airport;
identifying (202) at least one tile within a predefined radius of the selected airport;
subdividing (204) the at least one tile into a plurality of tiles;
determining an elevation for each of the plurality of tiles; and
updating (312) the terrain database with the plurality of tiles in place of the at least one tile.

2. The method of Claim 1, wherein the elevation for each of the plurality of tiles is determined from database in the plurality of databases.

3. The method of Claim 2, further comprising:
receiving onboard sensor data from the plurality of databases, the onboard sensor data corresponding to a location of each of the plurality of tiles; and
verifying the determined elevation for each of the plurality of tiles based on the onboard sensor data.

4. The method of any preceding Claim, further comprising:
identifying a plurality of similar elevation tiles from the terrain database;
consolidating the similar elevation tiles into a single tile; and
updating the terrain database with the single tile.

5. The method of any preceding Claim, further comprising:
receiving onboard sensor data from the plurality of databases, the onboard sensor data corresponding terrain and obstacle elevations;
identifying a terrain elevation or obstacle elevation from a corresponding terrain database or obstacle database in the plurality of databases; and
verifying the terrain elevation or obstacle elevation based on the onboard sensor data.

6. The method of Claim 5, further comprising:
determining an accuracy value of the terrain elevation or obstacle elevation; and updating the terrain database or obstacle database with the accuracy value.

7. The computer apparatus of Claim 6, wherein the accuracy value corresponds to a deviation among the onboard sensor data for the identified terrain elevation or obstacle elevation.

8. A system comprising:
a plurality of databases including a terrain database (102), an obstacle database (104), and an onboard flight sensor database (106); and
at least one processor (100) in data communication with the plurality of databases and a memory storing processor executable code for configuring the at least one processor to:
receive terrain elevation data from the terrain database;
receive obstacle elevation data from the obstacle database;
receive onboard sensor data from the onboard flight sensor database, the
onboard sensor data corresponding terrain and obstacle elevations; and verify the terrain elevation data and obstacle elevation data based on the
onboard sensor data.

9. The system of Claim 8, wherein the at least one processor is further configured to:
determine an accuracy value of the terrain elevation data and obstacle elevation data; and
update the terrain database and obstacle database with the accuracy value.

10. The system of Claim 8 or 9, wherein the at least one processor embodies a trained neural network.

11. The system of Claim 8, 9 or 10, wherein the at least one processor is further configured to:
receive a selected airport;
identify at least one tile within a predefined radius of the selected airport;
subdivide the at least one tile into a plurality of tiles;
determine an elevation for each of the plurality of tiles; and
update the terrain database with the plurality of tiles in place of the at least one tile.

12. The system of any of Claims 8 to 11, wherein the elevation for each of the plurality of tiles is determined from database in the plurality of databases.

13. The system of Claim 12, wherein the at least one processor is further configured to verify the determined elevation for each of the plurality of tiles based on the onboard sensor data.

14. The system of any of Claims 8 to 13, wherein the at least one processor is further configured to:
identify a plurality of similar elevation tiles from the terrain database;
consolidate the similar elevation tiles into a single tile; and
update the terrain database with the single tile.
